# EUROPÄISCHE PATENTSCHRIFT

(11) **EP 2 736 779 B1**
(45) Veröffentlichungstag und Bekanntmachung des Hinweises auf die Patenterteilung: **12.07.2017**
(21) Anmeldenummer: 12724962.1
(22) Anmeldetag: 29.05.2012
(51) Int. Cl.: B60T 1/10, B60T 8/32, B60T 8/36, B60T 8/40, B60T 8/48, B60T 13/16, B60T 13/66, F04C 2/10

(54) **BREMSSYSTEM FÜR EIN FAHRZEUG UND VERFAHREN ZUM BETREIBEN EINES BREMSSYSTEMS EINES FAHRZEUGS**
BRAKE SYSTEM FOR A VEHICLE AND METHOD FOR OPERATING A BRAKE SYSTEM OF A VEHICLE
SYSTÈME DE FREINAGE CONÇU POUR UN VÉHICULE ET PROCÉDÉ POUR FAIRE FONCTIONNER UN SYSTÈME DE FREINAGE D'UN VÉHICULE

(30) Priorität: 26.07.2011 DE 102011079862
(43) Veröffentlichungstag der Anmeldung: 04.06.2014
(73) Patentinhaber: Robert Bosch GmbH, 70442 Stuttgart (DE)
(72) Erfinder: KAESTNER, Frank, 74321 Bietigheim-Bissingen (DE); KUNZ, Michael, 71711 Steinheim An Der Murr (DE); SCHEPP, Rene, 71336 Waiblingen (DE); ALAZE, Norbert, 71706 Markgroeningen (DE)
(86) Internationale Anmeldenummer: PCT/EP2012/060010
(87) Internationale Veröffentlichungsnummer: WO 2013/013859

(56) Entgegenhaltungen:
- EP-A1- 0 253 157
- DE-A1- 3 903 532
- DE-A1- 10 053 991
- DE-A1- 10 065 234
- DE-A1- 19 643 343
- DE-A1-102007 022 216
- DE-A1-102007 043 592
- DE-A1-102007 050 820

## Beschreibung

Die Erfindung betrifft ein Bremssystem für ein Fahrzeug. Des Weiteren betrifft die Erfindung ein Verfahren zum Betreiben eines Bremssystems eines Fahrzeugs.

### Stand der Technik

In der EP 0 565 153 A1 ist eine als Antischlupfregelung ausgebildete Plungervorrichtung beschrieben. Mittels der Antischlupfregelung kann ein Bremsflüssigkeitsvolumen aus einer Radbremszange in ein Flüssigkeitsspeichervolumen der Antischlupfregelung eingesaugt werden, um einen Bremsdruck in der Radbremszange zu reduzieren. Ebenso kann ein Bremsflüssigkeitsvolumen aus dem Flüssigkeitsspeichervolumen der Antischlupfregelung zum Steigern des Bremsdrucks in die Radbremszange hineingedrückt werden. Weitere derartige Systeme sind aus den Entgegenhaltungen DE 196 43 343 A1, DE 100 65 234 A1 und DE 39 03 532 A1 bekannt.

### Offenbarung der Erfindung

Die Erfindung schafft ein Bremssystem für ein Fahrzeug mit den Merkmalen des Anspruchs 1 und ein Verfahren zum Betreiben eines Bremssystems eines Fahrzeugs mit den Merkmalen des Anspruchs 8.

### Vorteile der Erfindung

Die vorliegende Erfindung ermöglicht ein Bremssystem mit einer Flüssigkeitsfördereinrichtung zum Steigern und zum Reduzieren eines in der mindestens einen Radbremszange vorliegenden Bremsdrucks unabhängig von einem in dem Hydraulikzylinder vorliegenden Innendruck, wobei die Flüssigkeitsfördereinrichtung eine vergleichsweise kleine Baugröße aufweist, mittels eines geringen Montageaufwands montierbar ist und zu niedrigen Kosten herstellbar ist. Die Flüssigkeitsfördereinrichtung mit dem in zwei Drehrichtungen steuerbaren Pumpmotor ist deshalb eine vorteilhafte Rekuperiereinheit/Verblendeinheit.

Gegenüber einem Plunger benötigt die Flüssigkeitsfördereinrichtung kein aufwändiges Getriebe, wie beispielsweise ein Spindelgetriebe. Der Energieverbrauch der Flüssigkeitsfördereinrichtung mit dem in zwei Drehrichtungen steuerbaren Pumpmotor ist aufgrund eines Entfallens von Reibungsverlusten, welche beispielsweise bei einem Plunger auftreten, vergleichsweise niedrig. Die vorliegende Erfindung gewährleistet somit auch eine Reduzierung eines Energieverbrauchs und einer Kraftstoffemission eines mit dem Bremssystem ausgestatteten Fahrzeugs. Außerdem benötigt die Flüssigkeitsfördereinrichtung nicht das vergleichsweise große Übersetzungsverhältnis eines Plungers.

Durch die Ausbildung der Flüssigkeitsfördereinrichtung zum wahlweise Pumpen von Bremsflüssigkeit aus der Flüssigkeitsspeichereinrichtung in die mindestens eine Radbremszange oder aus der mindestens einen Radbremszange in die Flüssigkeitsspeichereinrichtung kann nicht nur der Bremsdruck in der mindestens einen Radbremszange vorteilhaft gesteigert, sondern auch (nahezu) vollständig abgebaut werden. Somit bietet die vorliegende Erfindung eine vorteilhafte Möglichkeit, zum vollständigen Abbauen eines Bremsdrucks in mindestens einer Radbremszange. Das Zusammenwirken einer weiteren Komponente des Bremssystems, wie beispielsweise mindestens eines Rückschlagsventils, mit der Flüssigkeitsfördereinrichtung beim Verändern des Bremsdrucks ist nicht nötig. Somit können mittels der Flüssigkeitsfördereinrichtung mit dem in zwei Drehrichtungen steuerbaren Pumpmotor andere Komponente, wie beispielsweise Rückschlagventile, eingespart werden.

In einer vorteilhaften Ausführungsform ist die den in zwei Drehrichtungen steuerbaren Pumpmotor umfassende Flüssigkeitsfördereinrichtung als Zahnradpumpe ausgebildet. Die Zahnradpumpe ist eine besonders energiesparende Realisierungsmöglichkeit für die vorteilhafte Flüssigkeitsfördereinrichtung.

Insbesondere kann die den in die zwei Drehrichtungen steuerbaren Pumpmotor umfassende Flüssigkeitsfördereinrichtung als Innenzahnradpumpe ausgebildet sein. In diesem Fall ist das wahlweise Fördern von Bremsflüssigkeit aus der Flüssigkeitsspeichereinrichtung in die mindestens eine Radbremszange oder aus der mindestens einen Radbremszange in die Flüssigkeitsspeichereinrichtung verlässlich ausführbar. Anstelle einer Innenzahnradpumpe kann jedoch auch eine Außenzahnradpumpe dazu eingesetzt werden.

Vorzugsweise ist die Flüssigkeitsfördereinrichtung über ein Zu- und Abflusssteuerventil mit der mindestens einen Radbremszange oder mit der Flüssigkeitsspeichereinrichtung hydraulisch verbunden. Über ein Schließen des Zu- und Abflusssteuerventils kann in diesem Fall ein unerwünschtes Durchsickern von Bremsflüssigkeit durch die nicht betriebene Flüssigkeitsfördereinrichtung verlässlich unterbunden werden.

In einer weiteren vorteilhaften Ausführungsform ist die Flüssigkeitsfördereinrichtung eine federlose Speicherkammer. Unter der federlosen Speicherkammer kann beispielsweise eine Speicherkammer verstanden werden, welche nicht federbelastet ist. Durch eine federlose Ausbildung der Speicherkammer kann eine zusätzliche Rückstellfeder am Speicherkolben eingespart werden.

Ebenso kann die Flüssigkeitsfördereinrichtung über eine Verbindungsleitung mit einem Bremsflüssigkeitsreservoir verbunden sein. Auf diese Weise ist die Flüssigkeitsspeichereinrichtung gegendruckfrei ausbildbar, was die von der Flüssigkeitsfördereinrichtung zum Transferieren von Bremsflüssigkeit in die Flüssigkeitsspeichereinrichtung aufzubringende Energie reduziert.

Bevorzugter Weise ist Flüssigkeitsfördereinrichtung ein nicht-gasvorgespannter Membranspeicher. Auf diese Weise ist verhinderbar, dass bei einem Pumpen der zuvor aufgenommen Bremsflüssigkeit in die mindestens eine Radbremszange ein Unterdruck an der Saugseite der Flüssigkeitsfördereinrichtung entsteht, welcher einen Speicherkammerkolben bis zu Endanschlag vorzieht.

In einer vorteilhaften Weiterbildung kann das Bremssystem eine Steuervorrichtung umfassen, welche dazu ausgelegt ist, unter Berücksichtigung einer bereitgestellten Information bezüglich eines zeitlich variierenden nicht-hydraulischen Zusatz-Bremsmoments eine Soll-Drehrichtung, eine Soll-Drehzahl und/oder eine Soll-Drehdauer des Pumpmotors der Flüssigkeitsfördereinrichtung festzulegen und ein der festgelegten Soll-Drehrichtung, der festgelegten Soll-Drehzahl und/oder der festgelegten Soll-Drehdauer entsprechendes Pumpensteuersignal an den Pumpmotor auszugeben. In diesem Fall kann mittels der Flüssigkeitsfördereinrichtung und der Steuervorrichtung der Bremsdruck in der mindestens einen Radbremszange so eingestellt werden, dass ein vom Fahrer vorgegebenes Gesamt-Bremsmoment trotz eines Variierens des nicht-hydraulischen Zusatz-Bremsmoments verlässlich einhaltbar ist. Insbesondere ein zeitlich variierendes Generator-Bremsmoment kann auf diese Weise so verblendet werden, dass der Fahrer ein Aktivieren oder ein Deaktivieren des Betriebs des Generators nicht bemerkt.

Die in den oberen Absätzen beschriebenen Vorteile sind auch bei einem entsprechenden Verfahren zum Betreiben eines Bremssystems eines Fahrzeugs gewährleistet.

Vorteilhafterweise können eine Soll-Drehrichtung, eine Soll-Drehzahl und/oder eine Soll-Drehdauer des Pumpmotors der Flüssigkeitsfördereinrichtung unter Berücksichtigung eines zeitlich variierenden nicht-hydraulischen Zusatz-Bremsmoments festgelegt werden, und der Pumpmotor der Flüssigkeitsfördereinrichtung entsprechend der festgelegten Soll-Drehrichtung, der festgelegten Soll-Drehzahl und/oder der festgelegten Soll-Drehdauer betrieben werden. Das erfindungsgemäße Verfahren kann somit auch zum Verblenden eines nicht-hydraulischen Zusatz-Bremsmoments, wie insbesondere eines Generator-Bremsmoments, genutzt werden.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform des Bremssystems; und
- Fig. 2: ein Flussdiagramm zum Darstellen einer Ausführungsform des Verfahrens zum Betreiben eines Bremssystems eines Fahrzeugs.

### Ausführungsformen der Erfindung

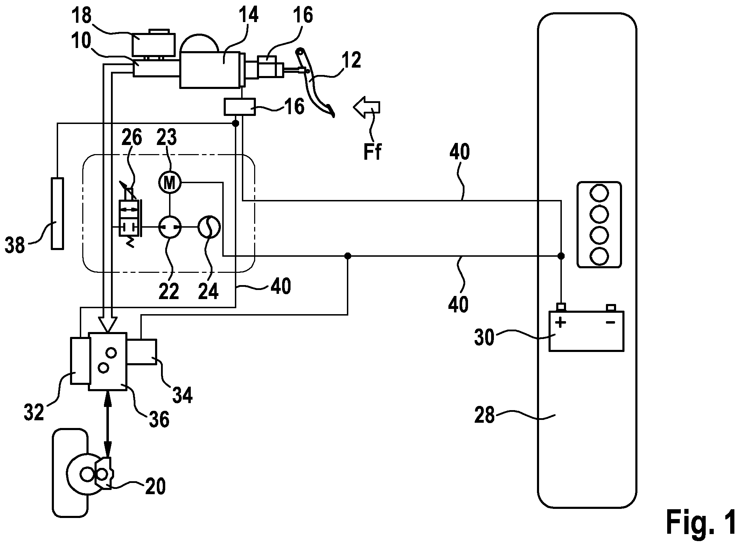

Fig. 1 zeigt eine schematische Darstellung einer Ausführungsform des Bremssystems.

Das in Fig. 1 schematisch wiedergegebene Bremssystem umfasst einen Hauptbremszylinder 10, welcher beispielsweise als Tandem-Hauptbremszylinder ausgebildet ist. Das im Weiteren beschriebene Bremssystem für ein Fahrzeug ist jedoch nicht auf die Ausstattung mit einem als Tandem-Hauptbremszylinder ausgebildeten Hauptbremszylinder 10 beschränkt.

Bevorzugter Weise ist ein Bremsbetätigungselement 12 derart an dem Hauptbremszylinder 10 angeordnet, dass ein Fahrer eines mit dem Bremssystem ausgestatteten Fahrzeugs mittels einer auf das Bremsbetätigungselement 12 aufgebrachten Fahrerbremskraft Ff mindestens einen verstellbaren Kolben des Hauptbremszylinders 12, wie beispielsweise einen Stangenkolben und/oder einen Schwimmkolben, in diesen hineinverstellen kann. Das Bremsbetätigungselement 12 kann insbesondere als Bremspedal ausgebildet sein. Das im Weiteren beschriebene Bremssystem ist jedoch nicht auf eine Ausstattung mit einem als Bremspedal ausgebildeten Bremsbetätigungselement 12 oder auf eine Ausstattung mit dem Bremsbetätigungselement 12 limitiert.

Optionalerweise weist das Bremssystem auch einen Bremskraftverstärker 14 auf, welcher dazu ausgelegt ist, bei einer Betätigung des Bremsbetätigungselements 12 eine (zur Fahrerbremskraft Ff) zusätzliche Unterstützungskraft auf den mindestens einen verstellbaren Kolben des Hauptbremszylinders 10 auszuüben. Auf diese Weise kann der Fahrer bei einem Abbremsen des Fahrzeugs kraftmäßig entlastet werden. Der Bremskraftverstärker 14 kann beispielsweise ein hydraulischer Bremskraftverstärker und/oder ein elektromechanischer Bremskraftverstärker sein. Vorteilhafterweise ist der Bremskraftverstärker 14 als stetig regelbarer/steuerbarer Bremskraftverstärker ausgebildet. Die Ausbildbarkeit des Bremskraftverstärkers 14 ist jedoch nicht auf die hier aufgezählten Beispiele beschränkt.

Das Bremssystem kann auch mindestens einen Sensor 16 umfassen, welcher dazu ausgelegt ist, eine Betätigungsstärke der Betätigung des Bremsbetätigungselements 12 durch den Fahrer zu ermitteln und ein entsprechendes Sensorsignal auszugeben. Der mindestens eine Sensor 16 kann beispielsweise dazu ausgelegt sein, die Fahrerbremskraft Ff, einen Verstellweg des Bremsbetätigungselements 12 und/oder einen Bremsdruck zu ermitteln. Der mindestens eine Sensor 16 kann insbesondere ein Stangenwegsensor oder ein Bremsdrucksensor sein. Die Ausbildbarkeit des mindestens einen Sensors 16 ist jedoch nicht auf die hier beschriebenen Beispiele limitiert.

An dem Hauptbremszylinder 12 kann auch ein Bremsflüssigkeitsreservoir 18 (Vorratsbehälter) angeordnet sein. Das Bremsflüssigkeitsreservoir 18 kann insbesondere über mindestens eine Flüssigkeitsaustauschöffnung, wie beispielsweise eine Schnüffelbohrung, mit dem Hauptbremszylinder 10 (hydraulisch) verbunden sein. Bevorzugter Weise ist das Bremsflüssigkeitsreservoir 18 so ausgebildet, dass in dem Bremsflüssigkeitsreservoir 18 der Atmosphärendruck unabhängig von einem Innendruck in dem Hauptbremszylinder 10 (konstant) vorliegt.

Der Hauptbremszylinder 10 ist mit mindestens einer Radbremszange 20 hydraulisch verbunden. Unter einem hydraulischen Verbundensein kann verstanden werden, dass ein Bremsflüssigkeitstransfer zwischen den zwei miteinander hydraulisch verbundenen Komponenten (zumindest bei einem Vorliegen mindestens eines möglicherweise dazwischen angeordneten Ventils in einem bestimmten Zustand) gewährleistet ist. Unter einer hydraulischen Verbindung des Hauptbremszylinders 10 mit der mindestens einen Radbremszange 20 kann insbesondere verstanden werden, dass der Fahrer mittels eines zumindest teilweisen Hineinverstellens des mindestens einen verstellbaren Kolbens in den Hauptbremszylinder 10 Bremsflüssigkeit aus dem Hauptbremszylinder 10 in die mindestens eine Radbremszange transferieren kann. Somit kann der Fahrer über eine Betätigung des Bremsbetätigungselements 12 einen Bremsdruck in der mindestens einen Radbremszange 20 zum Ausüben eines hydraulischen Bremsmoments auf das mindestens eine zugeordnete Rad aufbauen.

Das Bremssystem kann insbesondere vier Radbremszangen 20 haben, welche jeweils einem Rad des Fahrzeugs zugeordnet sind. Es wird jedoch darauf hingewiesen, dass das hier beschriebene Bremssystem nicht auf eine Ausstattung mit einer bestimmten Anzahl von Radbremszangen 20 limitiert ist. Das Bremssystem kann somit auch zum Abbremsen eines Fahrzeugs mit mehr als vier Rädern ausgebildet sein.

Das Bremssystem weist auch eine Flüssigkeitsfördereinrichtung 22 auf, mittels welcher Bremsflüssigkeit in die mindestens eine Radbremszange 20 und aus der mindestens einen Radbremszange 20 transferierbar ist. Die Flüssigkeitsfördereinrichtung 22 umfasst einen in zwei Drehrichtungen steuerbaren Pumpmotor 23, welcher so ansteuerbar ist, dass Bremsflüssigkeit wahlweise mittels der Flüssigkeitsfördereinrichtung 22 entweder aus einer Flüssigkeitsspeichereinrichtung 24 in die mindestens eine Radbremszange 20 oder aus der mindestens einen Radbremszange 20 in die Flüssigkeitsspeichereinrichtung 24 pumpbar ist. Dazu ist die Flüssigkeitsfördereinrichtung 22 an einer Seite mit der Flüssigkeitsspeichereinrichtung 24 und an einer anderen Seite mit der mindestens einen Radbremszange 20 hydraulisch verbunden.
Somit kann mittels der Flüssigkeitsfördereinrichtung 22 weitere Bremsflüssigkeit zusätzlich zu der aus dem Hauptbremszylinder 10 transferierten Bremsflüssigkeit in die mindestens eine Radbremszange 20 gepumpt werden. Durch das Ausstatten des Bremssystems mit der Flüssigkeitsfördereinrichtung 22 kann der Bremsdruck in der mindestens einen Radbremszange deshalb über den mittels der Fahrerbremskraft Ff aufgebauten Bremsdruck gesteigert werden. Dies kann beispielsweise für ein schnelleres Abbremsen des Fahrzeugs genutzt werden. Ebenso kann der Bremsdruck in der mindestens einen Radbremszange 20 mittels der Flüssigkeitsfördereinrichtung 22 reduziert werden.
Durch die vorteilhafte Ausstattung des Bremssystems mit der Flüssigkeitsfördereinrichtung kann der Bremsdruck in der mindestens einen Radbremszange 20 (unabhängig von einem in dem Hauptbremszylinder 10 vorliegenden Innendruck) wahlweise konstant gehalten, reduziert oder gesteigert werden. Man kann dies auch so umschreiben, dass der Bremsdruck in der mindestens einen Radbremszange 20 unabhängig von der auf das Bremsbetätigungselement 12 ausgeübten Fahrerbremskraft Ff einstellbar ist. Die Flüssigkeitsfördereinrichtung 22 kann somit auch als Verblendvorrichtung genutzt werden, mittels welcher das hydraulische Bremsmoment der mindestens einen Radbremszange 20 an ein nicht-hydraulisches Zusatz-Bremsmoment, wie beispielsweise an ein Generator-Bremsmoment, anpassbar ist. Wie unten genauer ausgeführt ist, eignet sich die Flüssigkeitsfördereinrichtung 22 besonders zum Verblenden eines zeitlich variierenden Generator-Bremsmoments. Es wird jedoch darauf hingewiesen, dass die Einsetzbarkeit der Flüssigkeitsfördereinrichtung 22 nicht auf ein Verblenden eines Generator-Bremsmoments limitiert ist.
Die mit dem in zwei Drehrichtungen steuerbaren Pumpmotor 23 ausgestattete Flüssigkeitsfördereinrichtung 22 weist gegenüber einem Plunger eine deutlich reduzierte Baugröße auf. Die Flüssigkeitsfördereinrichtung 22 ist außerdem ohne einen Reibungsverlust betreibbar, wodurch ein Energieverbrauch und eine Schadstoffemission des mit dem Bremssystem ausgestatteten Fahrzeugs reduzierbar sind. Außerdem benötigt die Flüssigkeitsfördereinrichtung 22 kein aufwändiges Getriebe, wodurch sie in der Regel kostengünstiger als ein Plunger herstellbar ist.

Die den in zwei Drehrichtungen steuerbaren Pumpmotor 23 umfassende Flüssigkeitsfördereinrichtung 22 kann beispielsweise als Zahnradpumpe ausgebildet sein. Durch die Ausbildung der Flüssigkeitsfördereinrichtung 22 als Zahnradpumpe können Pulsationen beim Transferieren von Bremsflüssigkeit aus der Flüssigkeitsspeichereinrichtung 24 in die mindestens eine Radbremszange 20 oder beim Transferieren von Bremsflüssigkeit aus der mindestens einen Radbremszange 20 in die Flüssigkeitsspeichereinrichtung 24 niedrig/klein gehalten werden. Auf diese Weise ist verhinderbar, dass der Fahrer bei einem Betätigen des Bremsbetätigungselements 12 ein durch große Pulsationen bewirktes Vibrieren oder Zittern des Bremsbetätigungselements 12 bemerkt. Durch die Reduzierung/Verhinderung der Pulsationen ist somit ein angenehmes Bremsbetätigungsgefühl für den Fahrer realisierbar. Außerdem ermöglicht das Einsetzen der als Zahnradpumpe ausgebildeten Flüssigkeitsfördereinrichtung 22 eine deutliche Reduzierung von Ungleichförmigkeiten des Moments, wodurch Körperschall reduzierbar ist.

Bevorzugter Weise ist die Flüssigkeitsfördereinrichtung 22 mit dem in zwei Drehrichtungen steuerbaren Pumpmotor 23 als Innenzahnradpumpe ausgebildet. Die als Innenzahnradpumpe ausgebildete Flüssigkeitsfördereinrichtung 22 kann mittels eines kostengünstigen und wenig Bauraum beanspruchenden Pumpmotors 23 betrieben werden. Es wird jedoch darauf hingewiesen, dass die Ausbildbarkeit des Bremssystems nicht auf ein Einsetzen eines bestimmten Pumpentyps als Flüssigkeitsfördereinrichtung 22 mit dem in zwei Drehrichtungen steuerbaren Pumpmotor 23 limitiert ist. Beispielsweise kann anstelle einer Innenzahnradpumpe für Vor- und Rückwärtslauf auch eine Außenzahnradpumpe für Vor- und Rückwärtslauf verwendet werden.

Optionalerweise kann die Flüssigkeitsfördereinrichtung 22 über ein Zu- und Abflusssteuerventil 26 mit der mindestens einen Radbremszange 20 (oder mit der Flüssigkeitsspeichereinrichtung 24) hydraulisch verbunden sein. Über eine Ausstattung des Bremssystems mit dem Zu- und Abflusssteuerventil 26 kann ein unerwünschtes Durchsickern von Bremsflüssigkeit durch die unbetätigte Flüssigkeitsfördereinrichtung 22 verlässlich unterbunden werden. Das Zu- und Abflusssteuerventil 26 kann in einer kostengünstigen Ausführungsform ein Schaltventil sein. Alternativ kann auch ein stetig stellbares/regelbares/steuerbares Ventil als Zu- und Abflusssteuerventil 26 verwendet werden. Bevorzugter Weise ist das Zu- und Abflusssteuerventil 26 als stromlos geschlossenes Ventil ausgebildet. Da ein Bestromen des Zu- und Abflusssteuerventils 26 in diesem Fall nur zum Steuern des Zu- und Abflusssteuerventils 26 in den zumindest teilgeöffneten Zustand notwendig ist, ist durch die stromlos geschlossene Ausbildung des Zu- und Abflusssteuerventils 26 Energie einsparbar.
Das hier beschriebene Bremssystem ist jedoch nicht auf eine Ausstattung mit dem Zu- und Abflusssteuerventil 26 limitiert. Insbesondere bei einer Ausbildung der Flüssigkeitsfördereinrichtung 22, welche das unerwünschte Hindurchsickern von Bremsflüssigkeit durch die unbetätigte Flüssigkeitsfördereinrichtung 22 verhindert, kann auf das Zu- und Abflusssteuerventil 26 verzichtet werden.
Das hier beschriebene Bremssystem kann insbesondere in einem Fahrzeug vorteilhaft eingesetzt werden, welches zusätzlich zu einer Brennkraftmaschine 28 noch einen (nicht dargestellten) Generator zum Aufladen einer Fahrzeugbatterie 30 aufweist. Die Einsetzbarkeit des Bremssystems ist jedoch nicht auf ein mit dem Generator ausgestattetes Fahrzeug beschränkt.

Das Bremssystem ist mit einer ESP-Vorrichtung 32 ausgestattet, welche dazu ausgelegt ist, die (nicht dargestellten) Hochdruckschaltventile, Umschaltventile, Radeinlassventile und/oder Radauslassventile des mindestens einen Bremskreises anzusteuern. Ferner ist das Bremssystem für ein Ausführen einer ABS-Funktion ausgelegt. Die ESP-Vorrichtung 32 kann einen Motor 34 und eine Hydraulik-Einheit 36 umfassen. Da die Ausführbarkeit des Bremssystems jedoch nicht auf einen bestimmten Typ der ESP-Vorrichtung 32 oder des mindestens einen Bremskreises limitiert ist, wird hier nicht genauer darauf eingegangen.
In einer vorteilhaften Weiterbildung weist das Bremssystem eine Steuereinrichtung 38 auf, welche dazu ausgelegt ist, die Flüssigkeitsfördereinrichtung 22 und/oder das stetig regelbare Auslassventil 26 zum Verblenden eines zeitlich variierenden nicht-hydraulischen Zusatz-Bremsmoments, wie beispielsweise des Generator-Bremsmoments des Generators, anzusteuern. Die Steuervorrichtung 38 kann über Leitungen 40 mit dem mindestens einen Sensor 16, dem Pumpmotor 23, dem stetig regelbaren Auslassventil 26, dem Generator, der Fahrzeugbatterie 30 und/der der ESP-Vorrichtung 32 verbunden sein.
In einer vorteilhaften Ausführungsform ist die Steuervorrichtung 38 dazu ausgelegt, unter Berücksichtung einer bereitgestellten Information bezüglich eines zeitlich variierenden nicht-hydraulischen Zusatz-Bremsmoments eine Soll-Drehrichtung, eine Soll-Drehzahl und/oder eine Soll-Drehdauer des Pumpmotors 23 der Flüssigkeitsfördereinrichtung 22 festzulegen und ein der festgelegten Soll-Drehrichtung, Soll-Drehzahl und/oder Soll-Drehdauer entsprechendes Pumpbremssteuersignal an den Pumpmotor 23 auszugeben. Insbesondere kann bei einer zeitlichen Zunahme des nicht-hydraulischen Zusatz-Bremsmoments, vor allem bei einer zeitlichen Zunahme eines Generator-Bremsmoments, die Soll-Drehrichtung des Pumpmotors 23 so festgelegt werden, dass mittels der Flüssigkeitsfördereinrichtung 22 Bremsflüssigkeit aus der mindestens einen Radbremszange 20 in die Flüssigkeitsspeichereinrichtung 24 pumpbar ist. Entsprechend kann bei einer zeitlichen Abnahme des nicht-hydraulischen Zusatz-Bremsmoments, insbesondere bei einer zeitlichen Abnahme eines Generator-Bremsmoments, die Soll-Drehrichtung des Pumpmotors 23 so festlegbar sein, dass mittels der Flüssigkeitsfördereinrichtung 22 Bremsflüssigkeit aus der Flüssigkeitsspeichereinrichtung 24 in die mindestens eine Radbremszange 20 pumpbar ist. Die Soll-Drehzahl und/oder die Soll-Drehdauer können abhängig von einer zeitlichen Differenz des nicht-hydraulischen Zusatz-Bremsmoments festlegbar sein. Auf diese Weise ist gewährleistbar, dass ein von dem Fahrer vorgegebenes Gesamt-Bremsmoment trotz eines Variierens des nicht-hydraulischen Zusatz-Bremsmoments, beispielsweise durch Aktivieren oder Deaktivieren des Generators, verlässlich einhaltbar ist.

Des Weiteren kann die Steuervorrichtung 38 dazu ausgelegt sein, die unten genauer angegebenen Verfahrensschritte auszuführen. Bezüglich der Auslegung der Steuervorrichtung 38 und der damit ausführbaren Verfahrensschritte wird deshalb auf die nachfolgende Figur verwiesen.

Die Flüssigkeitsspeichereinrichtung 24 kann eine Speicherkammer, insbesondere eine federlose Speicherkammer, sein. Durch eine federlose Ausbildung der Speicherkammer kann eine zusätzliche Rückstellfeder am Speicherkolben entfallen. Es wird jedoch darauf hingewiesen, dass durch die vorteilhafte Einsetzbarkeit der Flüssigkeitsfördereinrichtung 22 das Transferieren von Bremsflüssigkeit aus der mindestens einen Radbremszange 20 in die Flüssigkeitsspeichereinrichtung 24 auch gegen einen in der Flüssigkeitsspeichereinrichtung 24 vorliegenden Druck möglich ist. Die Ausbildung der Flüssigkeitsspeichereinrichtung 24 als federlose Speicherkammer oder als Niederdruckspeicher ist somit lediglich optional.

Außerdem kann die Flüssigkeitsspeichereinrichtung 24 über eine (nicht dargestellte) Verbindungsleitung, beispielsweise von ihrer Rückseite her, mit dem Bremsflüssigkeitsreservoir 18 verbunden sein. Durch die vorteilhafte Anbindung der Flüssigkeitsspeichereinrichtung 24 an das Bremsflüssigkeitsreservoir 18 wird bei einer Aufnahme von Bremsflüssigkeit (aus der mindestens einen Radbremszange 20) über ein Verschieben des Speicherkolbens der Flüssigkeitsspeichereinrichtung 24 Bremsflüssigkeit von der Rückseite des Speicherkolbens in das Bremsflüssigkeitsreservoir 18 gedrückt. Die mit dem Bremsflüssigkeitsreservoir 18 verbundene Flüssigkeitsspeichereinrichtung 24 ist darum gegendruckfrei ausbildbar. Dies senkt den von der Flüssigkeitsfördereinrichtung 22 zum Transferieren von Bremsflüssigkeit aus der mindestens einen Radbremszange 20 in die Flüssigkeitsspeichereinrichtung 24 aufzubringenden Druck und reduziert damit den Energieverbrauch der Flüssigkeitsfördereinrichtung 22. Ebenso sind auf diese Weise die baulichen Anforderungen an die Flüssigkeitsfördereinrichtung 22 reduzierbar.

Bei der vorteilhaften Anbindung der Flüssigkeitsspeichereinrichtung 24 an das Bremsflüssigkeitsreservoir 18 wird die Dichtung im Speicherkolben außerdem von beiden Seiten mit Bremsflüssigkeit beaufschlagt. Die Dichtung kann somit eine sehr geringe Reibung aufweisen. Die Kosten für die Dichtung der Flüssigkeitsspeichereinrichtung 24, welche beispielsweise aus PTFE ausgebildet sein kann, können damit reduziert werden.

In einer bevorzugten Ausführungsform ist die Flüssigkeitsspeichereinrichtung 24 ein nicht-gasvorgespannter Membranspeicher. Auf diese Weise ist verhinderbar, dass bei einem Pumpen der zuvor aufgenommenen Bremsflüssigkeit in den mindestens einen Radbremszylinder 20 mittels der Flüssigkeitsfördereinrichtung 22 ein Unterdruck an der Saugseite der Flüssigkeitsfördereinrichtung 22 entsteht und somit ein Vorziehen des Speicherkolbens/Speicherkammerkolbens bis zum Endanschlag stattfindet. Der Einsatz der Membran ist somit eine vorteilhafte Möglichkeit zum Reduzieren/Vermeiden eines Vorspanndrucks in der an das Bremsflüssigkeitsreservoir 18 angebundenen Flüssigkeitsspeichereinrichtung 24. Die Membran ist vorzugsweise so ausgelegt, dass sie sich bei höheren Drücken an dem Gehäuse der Speicherkammer anlegt, ohne dabei beschädigt/zerstört zu werden. Es wird darauf hingewiesen, dass die Ausbildung der Flüssigkeitsspeichereinrichtung 24 als Membranspeicher auch ohne die rückseitige Verbindung zu dem Bremsflüssigkeitsreservoir 18 vorteilhaft ist, da auf diese Weise eine Schmierung zur Reibungsreduzierung der bewegten Dichtung nicht mehr notwendig ist.

Allerdings ist das Bremssystem nicht auf eine als nicht-gasvorgespannte Membranspeicher ausgebildete Flüssigkeitsspeichereinrichtung 24 beschränkt. Als Alternative zu einer derartigen Ausbildung der Flüssigkeitsspeichereinrichtung 24 kann die Reibung der Dichtung beim Ansaugen des Speicherkolbens auch reduziert werden, indem alternativ zur Unterstützung der Kolbenbewegung eine schwächere Feder eingebaut wird.

Die Flüssigkeitsspeichereinrichtung 24 kann insbesondere für ein Speichervolumen zwischen 2 bis 5 cm³, insbesondere zwischen 3 bis 3,5 cm³, ausgelegt sein. Für die Flüssigkeitsspeichereinrichtung 24 kann somit auch eine platzsparende Komponente verwendet werden.

Es wird darauf hingewiesen, dass bei den oben ausgeführten Ausführungsbeispielen eine Leckage an der Dichtung der Flüssigkeitsspeichereinrichtung 24 ausgeschlossen ist.

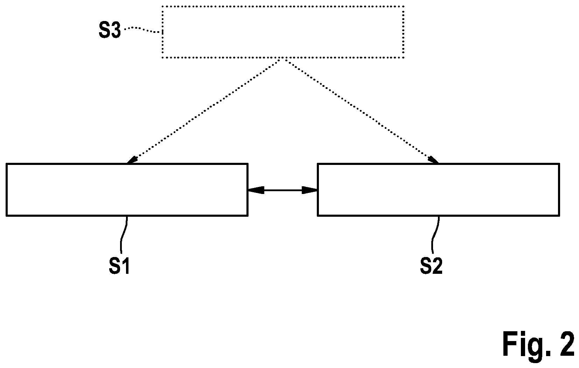

Fig. 2 zeigt ein Flussdiagramm zum Darstellen einer Ausführungsform des Verfahrens zum Betreiben eines Bremssystems eines Fahrzeugs.

Das in Fig. 2 schematisch dargestellte Verfahren ist beispielsweise mittels des oben beschriebenen Bremssystems ausführbar. Es wird jedoch darauf hingewiesen, dass die Ausführbarkeit des Verfahrens nicht auf die Verwendung dieses Bremssystems limitiert ist.

In einem Verfahrensschritt S1 wird ein Bremsdruck in mindestens einer mit einem Hydraulikzylinder hydraulisch verbundenen Radbremszange gesteigert. Dies erfolgt durch Ansteuern eines Pumpmotors einer Flüssigkeitsfördereinrichtung, welche an einer Seite mit der mindestens einen Radbremszange und an einer anderen Seite mit einer Flüssigkeitsspeichereinrichtung verbunden ist. Dabei wird der Pumpmotor der Flüssigkeitsfördereinrichtung in eine erste Drehrichtung gesteuert, wodurch Flüssigkeit aus der Flüssigkeitsspeichereinrichtung in die mindestens eine Radbremszange gepumpt wird.

In einem Verfahrensschritt S2 wird der Bremsdruck in der mindestens einen Radbremszange reduziert. Dies geschieht durch Steuern des Pumpmotors der Flüssigkeitsfördereinrichtung in eine zweite Drehrichtung, welchen der ersten Drehrichtung entgegen gerichtet ist. Durch das Betreiben des Pumpmotors in der zweiten Drehrichtung wird Bremsflüssigkeit aus der mindestens einen Radbremszange in die Flüssigkeitsspeichereinrichtung gepumpt.

Die Bezeichnung der Verfahrensschritte S1 und S2 legt keine zeitliche Reihenfolge zum Ausführen von diesen fest. Stattdessen können die Verfahrensschritte S1 und S2 mit beliebig vielen Wiederholungen in unterschiedlicher Reihenfolge ausgeführt werden.

Optionalerweise kann in einem Verfahrensschritt S3 eine Soll-Drehrichtung, eine Soll-Drehzahl und/oder eine Soll-Drehdauer des Pumpmotors der Flüssigkeitsfördereinrichtung unter Berücksichtigung eines zeitlich variierenden nicht-hydraulischen Zusatz-Bremsmoments festgelegt werden. Anschließend wird der Pumpmotor entsprechend der festgelegten Soll-Drehrichtung, Soll-Drehzahl und/oder Soll-Drehdauer betrieben. Man kann dies auch so umschreiben, dass in dem Verfahrenschritt S3 festgelegt wird, ob Verfahrensschritt S1 oder S2 auszuführen ist, und welche Soll-Drehzahl und/oder Soll-Drehdauer dabei eingehalten werden soll.

## Patentansprüche

1. Bremssystem für ein Fahrzeug mit:
einem Hauptbremszylinder (10), welcher mit mindestens einer Radbremszange (20) hydraulisch verbunden ist; und
einer Flüssigkeitsfördereinrichtung (22), mittels welcher Bremsflüssigkeit in die mindestens eine Radbremszange (20) und aus der mindestens einen Radbremszange (20) transferierbar ist, wobei die Flüssigkeitsfördereinrichtung (22) einen in zwei Drehrichtungen steuerbaren Pumpmotor (23) umfasst, welcher so ansteuerbar ist, dass Bremsflüssigkeit wahlweise mittels der Flüssigkeitsfördereinrichtung (22) entweder aus einer Flüssigkeitsspeichereinrichtung (24) in die mindestens eine Radbremszange (20) oder aus der mindestens einen Radbremszange (20) in die Flüssigkeitsspeichereinrichtung (24) pumpbar ist;
**dadurch gekennzeichnet, dass**
die Flüssigkeitsfördereinrichtung (22) zusätzlich zu einer ESP-Vorrichtung (32), welche eine zusätzliche Hydraulik-Einheit (36) und einen Motor (34) umfasst, an dem Bremssystem ausgebildet ist, und die Flüssigkeitsfördereinrichtung (22) an einer Seite mit der Flüssigkeitsspeichereinrichtung (24) und an einer anderen Seite über ein Zu- und Abflusssteuerventil (26) mit der ESP-Vorrichtung (32) und der mindestens einen Radbremszange (20) hydraulisch verbunden ist.

2. Bremssystem nach Anspruch 1, wobei die den in die zwei Drehrichtungen steuerbaren Pumpmotor (23) umfassende Flüssigkeitsfördereinrichtung (22) als Zahnradpumpe ausgebildet ist.

3. Bremssystem nach Anspruch 2, wobei die den in die zwei Drehrichtungen steuerbaren Pumpmotor (23) umfassende Flüssigkeitsfördereinrichtung (22) als Innenzahnradpumpe ausgebildet ist.

4. Bremssystem nach einem der vorhergehenden Ansprüche, wobei die Flüssigkeitsspeichereinrichtung (24) eine federlose Speicherkammer ist.

5. Bremssystem nach einem der vorhergehenden Ansprüche, wobei die Flüssigkeitsspeichereinrichtung (24) über eine Verbindungsleitung mit einem Bremsflüssigkeitsreservoir (18) verbunden ist.

6. Bremssystem nach einem der vorhergehenden Ansprüche, wobei die Flüssigkeitsspeichereinrichtung (24) ein nicht-gasvorgespannter Membranspeicher ist.

7. Bremssystem nach einem der vorhergehenden Ansprüche, wobei das Bremssystem eine Steuervorrichtung (38) umfasst, welche dazu ausgelegt ist, unter Berücksichtigung einer bereitgestellten Information bezüglich eines zeitlich variierenden nicht-hydraulischen Zusatz-Bremsmoments eine Soll-Drehrichtung, eine Soll-Drehzahl und/oder eine Soll-Drehdauer des Pumpmotors (23) der Flüssigkeitsfördereinrichtung (22) festzulegen und ein der festgelegten Soll-Drehrichtung, der festgelegten Soll-Drehzahl und/oder der festgelegten Soll-Drehdauer entsprechendes Pumpensteuersignal an den Pumpmotor (23) auszugeben.

8. Verfahren zum Betreiben eines Bremssystems eines Fahrzeugs mit den Schritten:
Steigern eines Bremsdrucks in mindestens einer mit einem Hauptbremszylinder (10) hydraulisch verbundenen Radbremszange (20) durch Steuern eines Pumpmotors (23) einer Flüssigkeitsfördereinrichtung (22), welche zusätzlich zu einer eine weitere Hydraulik-Einheit (36) und einen Motor (34) umfassenden ESP-Vorrichtung (32) an dem Bremssystem ausgebildet ist, und welche an einer Seite über ein Zu- und Abflusssteuerventil (26) mit der ESP-Vorrichtung (32) und der mindestens einen Radbremszange (20) und an einer anderen Seite mit einer Flüssigkeitsspeichereinrichtung (24) verbunden ist, in eine erste Drehrichtung, wodurch Bremsflüssigkeit aus der Flüssigkeitsspeichereinrichtung (24) in die mindestens eine Radbremszange (20) gepumpt wird (S1); und
Reduzieren des Bremsdrucks in der mindestens einen Radbremszange (20) durch Steuern des Pumpmotors (23) der Flüssigkeitsfördereinrichtung (22) in eine zweite Drehrichtung, wodurch Bremsflüssigkeit aus der mindestens einen Radbremszange (20) in die Flüssigkeitsspeichereinrichtung (24) gepumpt wird (S2).

9. Verfahren nach Anspruch 8, wobei eine Soll-Drehrichtung, eine Soll-Drehzahl und/oder eine Soll-Drehdauer des Pumpmotors (23) der Flüssigkeitsfördereinrichtung (22) unter Berücksichtigung eines zeitlich variierenden nicht-hydraulischen Zusatz-Bremsmoments festgelegt werden und der Pumpmotor (23) der Flüssigkeitsfördereinrichtung (22) entsprechend der festgelegten Soll-Drehrichtung, der festgelegten Soll-Drehzahl und/oder der festgelegten Soll-Drehdauer betrieben wird.

## Claims

1. Brake system for a vehicle having:
a brake master cylinder (10) which is connected hydraulically to at least one wheel brake calliper (20); and
a fluid delivery device (22), by means of which brake fluid can be transferred into the at least one wheel brake calliper (20) and out of the at least one wheel brake calliper (20), the fluid delivery device (22) comprising a pump motor (23) which can be controlled in two rotational directions and can be actuated in such a way that the brake fluid can be pumped by means of the fluid delivery device (22) selectively either out of a fluid storage device (24) into the at least one wheel brake calliper (20) or out of the at least one wheel brake calliper (20) into the fluid storage device (24);
**characterized in that**,
in addition to an ESP apparatus (32) which comprises an additional hydraulic unit (36) and a motor (34), the fluid delivery device (22) is configured on the brake system, and the fluid delivery device (22) is connected hydraulically on one side to the fluid storage device (24) and on another side via an inflow and outflow control valve (26) to the ESP apparatus (32) and the at least one wheel brake calliper (20).

2. Brake system according to Claim 1, the fluid delivery device (22) which comprises the pump motor (23) which can be controlled in the two rotational directions being configured as a gear pump.

3. Brake system according to Claim 2, the fluid delivery device (22) which comprises the pump motor (23) which can be controlled in the two rotational directions being configured as an internal gear pump.

4. Brake system according to one of the preceding claims, the fluid storage device (24) being a springless storage chamber.

5. Brake system according to one of the preceding claims, the fluid storage device (24) being connected via a connecting line to a brake fluid reservoir (18).

6. Brake system according to one of the preceding claims, the fluid storage device (24) being a diaphragm accumulator which is not prestressed by gas.

7. Brake system according to one of the preceding claims, the brake system comprising a control apparatus (38) which is designed to set a setpoint rotational direction, a setpoint rotational speed and/or a setpoint rotational duration of the pump motor (23) of the fluid delivery device (22) with consideration of provided information with regard to a temporally varying non-hydraulic additional braking moment, and to output a pump control signal which corresponds to the set setpoint rotational direction, set setpoint rotational speed and/or the set setpoint rotational duration to the pump motor (23).

8. Method for operating a brake system of a vehicle having the steps:
increasing of a brake pressure in at least one wheel brake calliper (20) which is connected hydraulically to a brake master cylinder (10), by way of controlling of a pump motor (23) of a fluid delivery device (22) in a first rotational direction, which fluid delivery device (22), in addition to an ESP apparatus (32) which comprises a further hydraulic unit (36) and a motor (34), is configured on the brake system, and which is connected on one side via an inflow and outflow control valve (26) to the ESP apparatus (32) and the at least one wheel brake calliper (20) and on the other side to a fluid storage device (24), as a result of which brake fluid is pumped (S1) out of the fluid storage device (24) into the at least one wheel brake calliper (20); and
reducing of the brake pressure in the at least one wheel brake calliper (20) by way of controlling of the pump motor (23) of the fluid delivery device (22) in a second rotational direction, as a result of which brake fluid is pumped (S2) out of the at least one wheel brake calliper (20) into the fluid storage device (24).

9. Method according to Claim 8, a setpoint rotational direction, a setpoint rotational speed and/or a setpoint rotational duration of the pump motor (23) of the fluid delivery device (22) being set with consideration of a temporally varying non-hydraulic additional braking moment, and the pump motor (23) of the fluid delivery device (22) being operated in a manner which corresponds to the set setpoint rotational direction, the set setpoint rotational speed and/or the set setpoint rotational duration.

## Revendications

1. Système de freinage pour un véhicule, avec:
un maître-cylindre (10), qui est hydrauliquement relié à au moins un étrier de frein de roue (20); et
un dispositif de transport de liquide (22), au moyen duquel un liquide de frein peut être transféré dans ledit au moins un étrier de frein de roue (20) ou hors dudit au moins un étrier de frein de roue (20), dans lequel le dispositif de transport de liquide (22) comprend un moteur de pompe (23) pouvant être commandé dans deux sens de rotation, qui peut être commandé de telle manière que du liquide de frein puisse être pompé au choix au moyen du dispositif de transport de liquide (22) soit hors d'un dispositif d'accumulation de liquide (24) vers ledit au moins un étrier de frein de roue (20) soit hors dudit au moins un étrier de frein de roue (20) vers le dispositif d'accumulation de liquide (24),
**caractérisé en ce que** le dispositif de transport de liquide (22) est formé sur le système de freinage, en plus d'un dispositif ESP (32), qui comprend une unité hydraulique supplémentaire (36) et un moteur (34), et le dispositif de transport de liquide (22) est relié hydrauliquement sur un côté au dispositif d'accumulation de liquide (24) et sur un autre côté, au moyen d'une vanne de commande d'arrivée et de départ (26), au dispositif ESP (32) et audit au moins un étrier de frein de roue (20).

2. Système de freinage selon la revendication 1, dans lequel le dispositif de transport de liquide (22) comprenant le moteur de pompe (23) pouvant être commandé dans les deux sens de rotation, est réalisé sous forme de pompe à engrenages.

3. Système de freinage selon la revendication 2, dans lequel le dispositif de transport de liquide (22) comprenant le moteur de pompe (23) pouvant être commandé dans les deux sens de rotation est réalisé sous forme de pompe à engrenages intérieurs.

4. Système de freinage selon l'une quelconque des revendications précédentes, dans lequel le dispositif d'accumulation de liquide (24) est une chambre d'accumulation sans ressort.

5. Système de freinage selon l'une quelconque des revendications précédentes, dans lequel le dispositif d'accumulation de liquide (24) est raccordé à un réservoir de liquide de frein (18) par une conduite de raccordement.

6. Système de freinage selon l'une quelconque des revendications précédentes, dans lequel le dispositif d'accumulation de liquide (24) est un accumulateur à membrane non précontraint au gaz.

7. Système de freinage selon l'une quelconque des revendications précédentes, dans lequel le système de freinage comprend un dispositif de commande (38), qui est conçu pour fixer un sens de rotation de consigne, un nombre de tours de consigne et/ou une durée de rotation de consigne du moteur de pompe (23) du dispositif de transport de liquide (22) en tenant compte d'une information fournie concernant un couple de freinage additionnel non hydraulique variant dans le temps et pour envoyer au moteur de pompe (23) un signal de commande de pompe correspondant au sens de rotation de consigne fixé, au nombre de tours de consigne fixé et/ou à la durée de rotation de consigne fixée.

8. Procédé pour faire fonctionner un système de freinage d'un véhicule comprenant les étapes suivantes:
augmenter une pression de freinage dans au moins un étrier de frein de roue (20) hydrauliquement relié à un maître-cylindre (10) par la commande d'un moteur de pompe (23) d'un dispositif de transport de liquide (22), qui est formé sur le système de freinage en plus d'un dispositif ESP (32) comprenant une autre unité hydraulique (36) et un moteur (34), et qui est raccordé sur un côté par une vanne de commande d'arrivée et de départ (26) au dispositif ESP (32) et audit au moins un étrier de frein de roue (20) et sur un autre côté à un dispositif d'accumulation de liquide (24), dans un premier sens de rotation, par lequel du liquide de frein est pompé (S1) hors du dispositif d'accumulation de liquide (24) vers ledit au moins un étrier de frein de roue (20); et
réduire la pression de freinage dans ledit au moins un étrier de frein de roue (20) par la commande du moteur de pompe (23) du dispositif de transport de liquide (22) dans un deuxième sens de rotation, par lequel du liquide de frein est pompé (S2) hors dudit au moins un étrier de frein de roue (20) vers le dispositif d'accumulation de liquide (24).

9. Procédé selon la revendication 8, dans lequel on fixe un nombre de tours de consigne et/ou une durée de rotation de consigne du moteur de pompe (23) du dispositif de transport de liquide (22) en tenant compte d'un couple de freinage additionnel non hydraulique variant dans le temps et on fait fonctionner le moteur de pompe (23) du dispositif de transport de liquide (22) conformément au sens de rotation de consigne fixé, au nombre de tours de consigne fixé et/ou à la durée de rotation de consigne fixée.
